# EUROPEAN PATENT SPECIFICATION

(11) **EP 4 318 218 B1**
(45) Date of publication and mention of the grant of the patent: **14.10.2026**
(21) Application number: 23189267.0
(22) Date of filing: 02.08.2023
(51) Int. Cl.: G06F 8/65

(54) **INTERMEDIATE DEVICE FOR UPDATING A CLIENT USING A PLURALITY OF SERVERS**
ZWISCHENGERÄT ZUM AKTUALISIEREN EINES CLIENTS ÜBER MEHRERE SERVER
DISPOSITIF INTERMEDIAIRE POUR METTRE A JOUR UN CLIENT EN UTILISANT PLUSIEURS SERVEURS

(30) Priority: 02.08.2022 IL 29532022
(43) Date of publication of application: 07.02.2024
(73) Proprietor: Red Bend Ltd., 4501307 Hod Ha'Sharon (IL)
(72) Inventor: VAINBERGER, Shlomi, 4284200 Bat Hefer (IL); JOSEPHS, Talia, 5358621 Givatayim (IL); KRIKUN, Felix, 4274814 Netanya (IL); GILAD, Yehuda, 6701432 Tel Aviv (IL)
(74) Representative: Rummler, Felix

(56) References cited:
- WO-A1-2022/061843
- KR-A- 20110 047 671
- US-A1- 2004 133 626
- US-A1- 2018 034 936
- US-A1- 2019 028 552

## Description

### BACKGROUND

The present invention, in some embodiments thereof, relates to software updates and, more specifically, but not exclusively, to systems and methods for updating multiple end devices.

Many end devices, such as mobile devices, and internet of things (IoT) device, repeatedly require installation of new update code, for example, to fix bugs, security breaches, and provide new features. Some devices are automatically updated using over-the-air (OTA) update approaches.

WO 2022/061843 A1 discloses a vehicle upgrade method and apparatus whereby are provided. The method includes determining by a server the distribution of updates packages in the vehicle where the server distributes updates packages.

US 2018/034936 A1 discloses systems and methods for the remote update and distribution of software, firmware, and/or data in a network of moving things.

KR 2011 0047671 A discloses a system for upgrading a firmware of an electronic book. The system includes automatic download of a firmware to the electronic book by checking the version of the firmware stored in the electronic book through the authentication of the electronic book.

US 2004/133626 A1 discloses methods for redirecting a client request for digital information to a server by selecting a server based on client location.

US 2019/028552 A1 discloses systems, methods, and computer-readable media for managing a distributed network of function execution environments.

### SUMMARY

According to a first aspect, a system for updating each of a plurality of mobile devices, comprises: at least one processor executing a code for: obtaining metadata from an end device without an updating agent deployed thereon, selecting an update server from a plurality of update servers according to the metadata, obtaining, from the update server, an indication of update code for installation on the end device, and updating the end device with the update code.

According to a second aspect, a method for updating each of a plurality of mobile devices, comprises: using at least one processor for: obtaining metadata from an end device without an updating agent deployed thereon, selecting an update server from a plurality of update servers according to the metadata, obtaining, from the update server, an indication of update code for installation on the end device, and updating the end device with the update code.

According to a third aspect, a non-transitory medium storing program instructions for computing a location of an object, which, when executed by a processor, cause the processor to: obtain metadata from an end device without an updating agent deployed thereon, select an update server from a plurality of update servers according to the metadata, obtain, from the update server, an indication of update code for installation on the end device, and update the end device with the update code.

In a further implementation form of the first, second, and third aspects, the at least one processor establishes a different communication channel with each one of a plurality of end devices without the update agent deployed thereon, wherein different metadata is obtained from each end device, wherein a different update server is selected for each of the plurality of end devices according to respective metadata.

In a further implementation form of the first, second, and third aspects, the at least one processor is connected to a charging station, and wherein the at least one processor executes the code for updating the end device while the end device is charging at the charging station.

In a further implementation form of the first, second, and third aspects, the end device is without an over the air (OTA) update agent deployed thereon.

In a further implementation form of the first, second, and third aspects, the end device includes an interface for communicating with the at least one processor, wherein the interface is unable to communicate with other devices.

In a further implementation form of the first, second, and third aspects, the end device comprises a drone.

In a further implementation form of the first, second, and third aspects, the at least one processor is connected to a docking station, and wherein the at least one processor executes the code for updating the end device while the end device is docking at the docking station.

In a further implementation form of the first, second, and third aspects, the metadata includes at least one of: brand of the end device, model of the end device, manufacturer of the end device, current software version installed on the end device, and time and/or date of last update.

In a further implementation form of the first, second, and third aspects, further comprising code for searching a plurality of locally stored update codes to identify the update code according to the indication.

In a further implementation form of the first, second, and third aspects, further comprising, when the update code is not found in local storage, obtaining the update code from the selected server.

In a further implementation form of the first, second, and third aspects, when the update code comprises a delta between an updated version and a current version installed on the end device, the at least one processor further executes a code for updating the end device using the delta.

In a further implementation form of the first, second, and third aspects, the at least one processor updates the end device with the delta using a communication protocol based on Unified Diagnostic Services (UDS) established between the end device and the at least one processor.

In a further implementation form of the first, second, and third aspects, when the update code comprises a full updated version of a size below a threshold, an existing version of the code on the end device is overwritten with the full updated version.

In a further implementation form of the first, second, and third aspects, when the update code comprises a full updated version of a size above a threshold, the at least one processor further executes a code for: downloading the full updated version from the update server to a local storage device, generating a delta code between the full updated version and an existing version of update code currently stored on the end client, locally storing the generated delta code, and updating the end device using the generated delta code.

In a further implementation form of the first, second, and third aspects, the at least one processor executes an OTA client for obtaining the update code from the update server for the end device.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting. The invention is defined by the appended independent claims. The dependent claims define preferred embodiments.

### BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1 is block diagram of components of a system that includes a computing device for updating end device(s) that do not have update agents installed thereon, in accordance with some embodiments of the present invention;
FIG. 2 is a flowchart of a method of updating end devices that do not have update agents installed thereon by a communal computing device, in accordance with some embodiments of the present invention; and
FIG. 3 is a dataflow diagram of a method of updating end devices that do not have update agents installed thereon by a communal computing device, in accordance with some embodiments of the present invention.

### DETAILED DESCRIPTION

The present invention, in some embodiments thereof, relates to software updates and, more specifically, but not exclusively, to systems and methods for updating multiple end devices.

As used herein, the term *update* or *updating* refers to update of software and/or firmware, in its entirety, or using a delta between a previous version and a current version.

As used herein, the term *code* (which is being updated) refers to any instructions that are being updated, for example, software and/or firmware.

An aspect of some embodiments of the present invention relates to systems, methods, computing devices, and code instructions (stored on a data storage device and executable by one or more processors) for customized updating of an end device without an updating agent deployed thereon, for example, a drone, an IoT device, a camera (that is integrated in a smartphone), and the like. Multiple different end devices, of different manufacturers, running different versions of code, may be updated in a customized manner, according to the requirements of the each end device. The updating of the end device(s) may be done by a communal computing device. In other words, the update function is offloaded from multiple end devices to the communal computing devices that provide update services to multiple end devices. The end device is unable to update itself, due to the lack of the updating agent, and relies on the communal computing device. The end device establishes communication with the communal computing device, for example, during charging and/or docking. The communal computing device obtains metadata from an end device without an updating agent installed thereon. The metadata provides information to enable correct updating of the end device, for example, current version of code, manufacturer of the end device, model of the end device, and the like. The communal computing device selects an update server from multiple different update servers according to the metadata, for example, each manufacturer of each end device manages their own update server. The communal computing device obtains an indication of the update code for installation on the end device. The communal computing device updates the end device with the relevant update code, for example, using a delta computed between the current version and the previous version installed on the end device, using the current version of code stored by the communal computing device, or using a current version of code obtained from the server (i.e., when the current version is not stored by the communal computing device).

At least some implementations of the systems, methods, computing devices, and/or code instructions described herein address the technical problem of updating software and/or firmware of end devices with no updating agent deployed thereon. Using existing approaches, devices such as smartphones and/or automobiles have over the air (OTA) update agents installed for automatically accessing an update server over a wireless network connection (e.g., internet, cellular connection) to download and install the relevant update. The technical problem may relate to updating of end devices, for example, drones, IoT devices, or cameras (such as professional cameras, or vehicle cameras which are not integrated with smartphones) which are equipped with a significant amount of software that requires repeated updating, for example, for fixing bugs, security issues, and providing improved features. However, such end devices may be lacking in sufficient processing resources and/or storage to both store and execute an update agent, and store and execute code for operation. At least some implementations of the systems, methods, computing devices, and/or code instructions described herein improve the technology of updating software and/or firmware of end devices, by enabling updating of end devices with no updating agent deployed thereon. At least some implementations of the systems, methods, computing devices, and/or code instructions described herein improve the performance of end devices, by removing the requirement of an updating agent deployed thereon, which reduces computational resources and/or storage resources that would otherwise be used to store and execute the updating agent, for example, reduced processor utilization and reduced memory requirements. This dedicating the available processors and/or memory for the main functions of the end device, rather sharing them with the update client which reduces performance of the main functions. Moreover, the computationally ineffective deployment of both update agents on different end devices, and maintenance of a dedicated server for each manufacturer of the different end devices is not required according to some embodiments.

Using prior approaches, performing a software update of a device requires connectivity with an update server, for receiving the update package that contains the update information and the update instructions. Additionally, the device is required to have a preinstalled update agent. The update agent is code instructions to get the update package, interpret the update instructions, execute the update instructions, and report the status of the update. The update server generates the update packages and manages the updates, i.e., checking available updates for each device model and version, rolling an update, etc... Update agents vary, from a very simple and small amount of code to a very sophisticated software program. The update agent has an impact on the bill of materials (BOM) of the device which may be restricted in resources. In prior approaches, the updated agent is deployed by the manufacturer of the end device as part of the end device's software, prior to distribution of the end device in the market. This approach of pre-deployment of the update agent poses many challenges and hurdles, the need to negotiate with the manufacturer at an early stage of development, and deployment of the update agent requires the physical involvement of the update solution provider in the manufacturing process. Moreover, on the server side, a generator of update packages and software for managing update campaigns is required. Typically, each original equipment manufacturer (OEM) as its own dedicated servers either operated by the OEM or hosted by the OTA service provider. Such prior approaches are used with vehicle OEMs and mobile OEMs, where the number of OEMs in the automotive industries and the mobile industries is limited, and dominated by large corporations. The limited number of large players enables setting up an OTA solution by licensing (from Tier) or in-house. However, in other industries, such as drone, IoT, and other manufactures of end devices, where there are a large number of different players, using standard approaches for installing updating agents and managing updates via update servers is not effective.

At least some implementations of the systems, methods, computing devices, and/or code instructions described herein provide a solution to the above mentioned technical problem, and/or improve the above mentioned technology, and/or improve upon the above mentioned prior approach, by providing a communal device that communicates with multiple different end devices and with one or more different update servers, for automatically updating each end device with the appropriate update code according to properties of each end device. The communal device eliminates the need to pre-deploy an OTA update agent (or other update agent that is not necessarily OTA based) on each end device, which improves the end device by lowering processing resource requirements and/or storage resource requirements. Moreover, the communal device may be provided with sufficient processing resources and/or sufficient storage resources to computationally efficiently handle updates for a large number of different end devices. The communal device may be provided with superior connectivity enabling a faster download of the update code in comparison to the down ability of the end device. For example, the communal device may be a land based computer that is easily equipment with a high bandwidth network connection, sufficient processors, and sufficient memory. In contrast, the end devices may be small mobile drones on which it is difficult to provide a high bandwidth network connection, difficult to provide sufficient processors, and difficult to provide sufficient memory, for storage and execution of the update agent and efficient download of update code.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

As used herein, the term *communal computing device* or *communal device* may be interchanged with the term *processor,* i.e., the processor of the communal computing device may execute code.

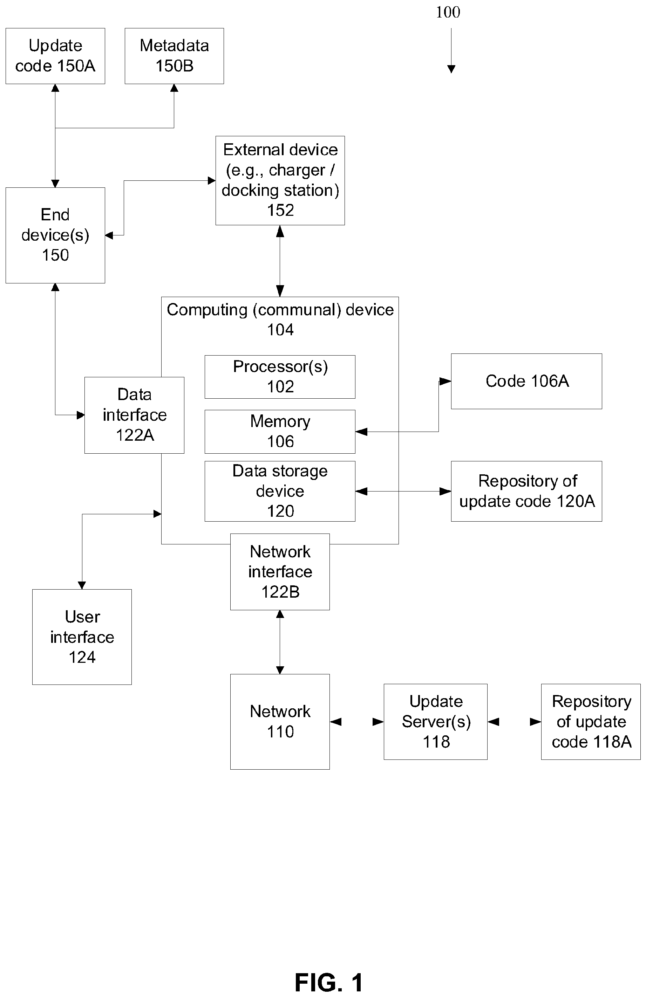

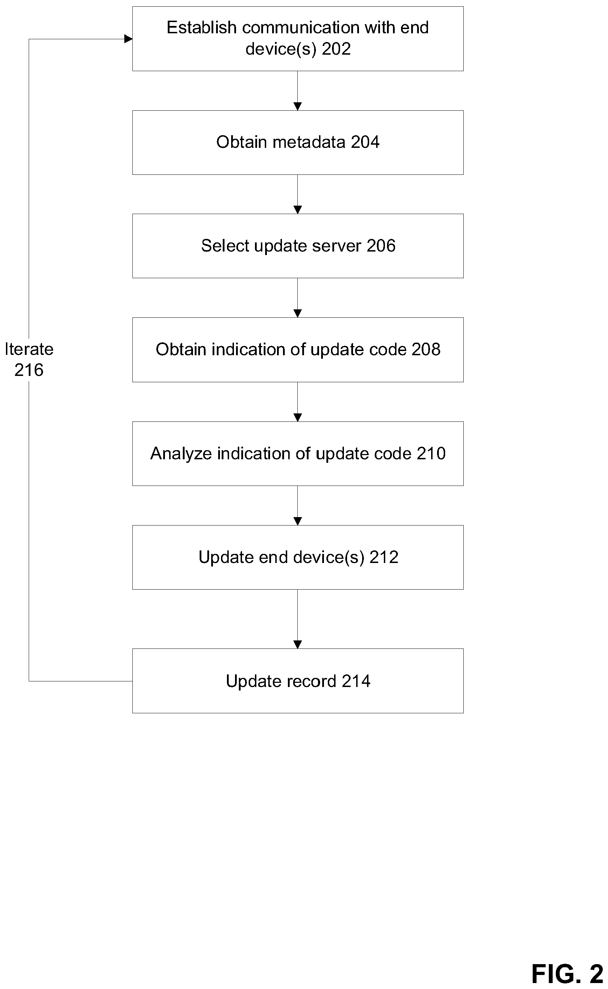

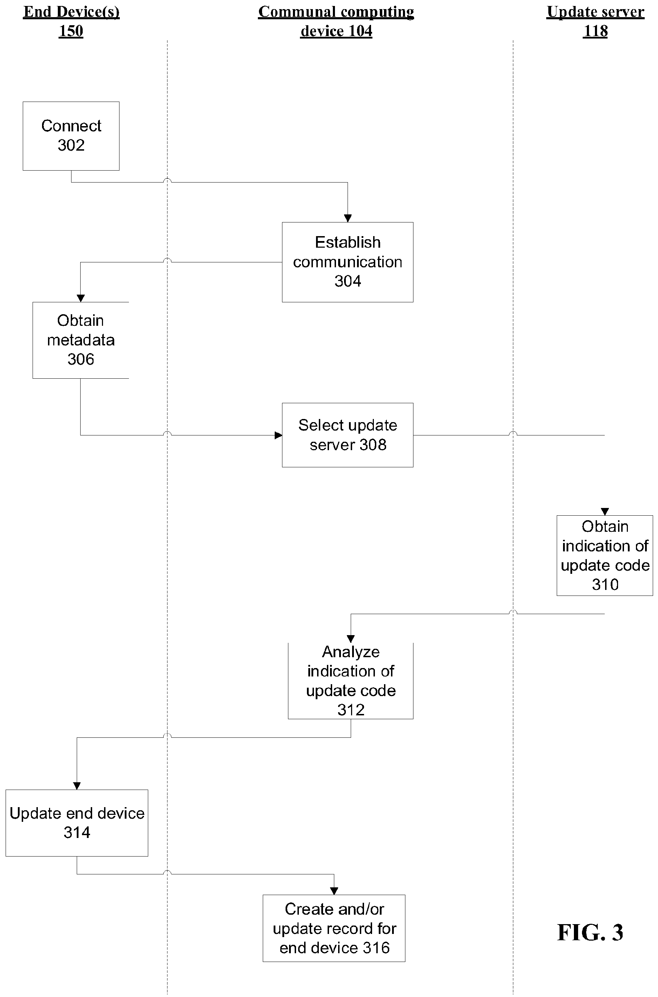

Reference is now made to FIG. 1, which is block diagram of components of a system 100 that includes a computing device 104 (also referred to herein as a communal device, or communal computing device) for updating end device(s) 150 that do not have update agents installed thereon, in accordance with some embodiments of the present invention. Reference is also made to FIG. 2, which is a flowchart of a method of updating end devices that do not have update agents installed thereon by a communal computing device, in accordance with some embodiments of the present invention. Reference is also made to FIG. 3, which is a dataflow diagram of a method of updating end devices that do not have update agents installed thereon by a communal computing device, in accordance with some embodiments of the present invention.

System 100 may implement the features of the method described with reference to FIGs. 2-3, by one or more hardware processors 102 of a computing device 104 executing code instructions (e.g. code 106A) stored in a memory (also referred to as a program store) 106.

Computing device 104 may be referred to herein as a communal device. Computing device 104 updates multiple different end devices 150, of different manufactures and/or models and/or executing different versions of update code, using update code obtained from one or more update servers 118.

End devices 150 may be implemented as, for example, drones, IoT devices, mobile devices, robots, and the like. End device(s) 150 do not have an updated agent installed thereon for automatically updating update code 150A installed thereon. End devices 150 may have limited processing resources and/or limited storage resources for storing and executing code to perform its primary function, which would be further constrained if an update agent were installed thereon. End device(s) 150 may store and/or dynamically generate metadata 150B, as described herein.

Computing device 104 may be implemented as, for example, a client terminal, a server, a virtual machine, a virtual server, a computing cloud, a mobile device, a desktop computer, a thin client, a Smartphone, a Tablet computer, a laptop computer, a wearable computer, glasses computer, and a watch computer. Computing device 104 is in communication with, and/or installed within, an external device to which end device(s) 150 may connect, for example, a charging station, a docking station, and a road infrastructure station. Computing device 104 updates end device(s) 150 while end device(s) 150 are connected to external device 152, while being charged by charging station, and/or while docking at the docking station.

Computing device 104 communicates with end device(s) 150 using one or more data interfaces 122A. Computing device 104 communicates with update server(s) 118 over a network via a network interface 122B. Data interface(s) 122A and network interface 122B may be implemented as two or more distinct interfaces (different physical and/or virtual ports), and/or may be implemented as a common interface, and/or combinations thereof (e.g., single physical port, two or more virtual ports).

Interfaces 122A and/or 122B may be implemented as, for example, a wire connection (e.g., physical port), a wireless connection (e.g., antenna), a network interface card, a wireless interface to connect to a wireless network, a physical interface for connecting to a cable for network connectivity, and/or virtual interfaces (e.g., software interface, application programming interface (API), software development kit (SDK), virtual network connection, a virtual interface implemented in software, network communication software providing higher layers of network connectivity).

Computing device 104 may communicate with end device(s) 150 via network 110, and/or via another network (not shown), and/or by a direct connection such as a cable and/or short range wireless connection.

Network 110 may be implemented as, for example, the internet, a local area network, a virtual network, a wireless network, a cellular network, a local bus, a point to point link (e.g., wired), and/or combinations of the aforementioned.

Processor(s) 102 may be implemented, for example, as a central processing unit(s) (CPU), a graphics processing unit(s) (GPU), field programmable gate array(s) (FPGA), digital signal processor(s) (DSP), and application specific integrated circuit(s) (ASIC). Processor(s) 102 may include a single processor, or multiple processors (homogenous or heterogeneous) arranged for parallel processing, as clusters and/or as one or more multi core processing devices.

Computing device 104 communicates with one or more update servers 118, for example, a respective server per each manufacturer of one or more end devices, and/or a communal server for multiple manufacturers of different types of end devices. Each update server 118 may store a repository of update code 118A, for example, different versions of the update code for different types of end devices 150. Computing device 150A may obtain update code from repository 118A of update server(s) 118, locally store the update code in repository 120A, and provide update code 150A to end device(s) 150. Update code 150A may refer to a delta between versions of update code which may be computed and/or provided by computing device 104, as described herein.

Memory 106 stores code instructions executable by hardware processor(s) 102. Exemplary memories 106 include a random access memory (RAM), read-only memory (ROM), a storage device, non-volatile memory, magnetic media, semiconductor memory devices, hard drive, removable storage, and optical media (e.g., DVD, CD-ROM). For example, memory 106 may store code 106A that execute one or more acts of the method described with reference to FIGs. 2-3. Code 106A may include an update agent that updates end device(s) 150, as described herein.

Computing device 104 may include data storage device 120 for storing data, for example, a repository 120A that stores different updates codes for different types of end devices obtained from different update servers, as described herein. Data storage device 120 may be implemented as, for example, a memory, a local hard-drive, a removable storage unit, an optical disk, a storage device, a virtual memory and/or as a remote server 118 and/or computing cloud (e.g., accessed over network 110).

Computing device 104 may include and/or is in communication with one or more user interfaces 124 that include a mechanism for inputting data and/or viewing other data, for example, viewing data on which update code is installed on which end device. Exemplary other user interfaces 124 include, for example, one or more of, a touchscreen, a display, a keyboard, a mouse, and voice activated software using speakers and microphone.

Referring now back to FIG. 2, at 202, the communal computing device establishes communication with one or more end devices.

End devices are devices without an update agent installed thereon, optionally without an OTA update agent installed thereon. Without the update agent, the end device(s) are unable to update themselves. End devices may be, for example, drones, IoT devices, cameras (e.g., car cameras, professional cameras), and the like. End devices may be resource limited, in terms of processors and/or memory, such that installation and/or execution of an update agent would significantly impact performance of the main function of the end device, for example, the end device would significantly slow down, crash, and/or otherwise be unable to perform the main function as designed.

The communication established between the communal computing device and the end device(s) may be, for example, via a short range wireless communication channel, a cable, a docking station that establishes electrical contact between the communal computing device and the end device(s), and the like.

According to the invention, communal computing device establishes communication with multiple different end devices, optionally simultaneously or substantially simultaneously. Different communication channels may be established with each end device, for example, virtual connections along a common link, or multiple dedicated communication channels may be established to the multiple different end devices. Alternatively, the communal computing device establishes one communication with one end device at a time.

The communal computing device may be connected to, and/or integrated with, a docking station and/or a road infrastructure station, for example, for drones, robots, car camera, and the like. The communal computing device establishes communication with the end device(s) while the end device(s) are docked at the docking station. For example, for fleets of drones a station connected to the communal computing device may be located at the fleet's operating center.

Alternatively or additionally, the communal computing device may be connected to, and/or integrated with, a charging station. The communal computing device may establish communication with the end device(s) while the end device(s) are charging at the charging station.

Optionally, the end device(s) include an interface designed for dedicated communication with the communal computing device. The interface may be unable to communicate with other devices. For example, interface of the docking station and/or the interface of the charging station may be used for establishing communication with the end device(s) for updating the end device(s). The interface may be the docking and/or charging interface, and/or a separate interface for updating that is linked to the docking and/or charging interface to enable updating while docking and/or charging.

At 204, the communal computing device obtains metadata from the end device(s). In the case of multiple connected end devices, a different metadata is obtained from each end device.

The metadata include one or more data elements used for determining which update code to provide to the end device. Exemplary metadata include: brand of the end device, model of the end device, manufacturer of the end device, current software version installed on the end device, and time and/or date of last update.

The metadata is obtained, for example, in response to a request from the communal computing device to the end device to provide the metadata, a message sent automatically by the end device upon establishing a communication channel with the communal computing device, and the like.

At 206, the communal computing device selects an update server from multiple update servers according to the metadata. In the case of multiple end devices, a different update server may be selected for each end device, according to respective metadata.

The update server is selected, for example, by accessing a mapping dataset that maps between one or more fields of the metadata, for example manufacturer, to the network address of the update server.

At 208, the communal computing device obtains an indication of update code for installation on the end device from the selected update server.

Optionally, the indication is a message of what the most current version of update code is that should be installed on the end device, i.e., rather than the actual update code itself. Alternatively or additionally, the indication is the full version of the most current version of the update code that should be installed on the end device. Alternatively or additionally, the indication is a partial amount of code, for example, a delta over the version currently installed in the end device.

The communal computing device obtains the indication from the update server by executing an OTA update agent (i.e., OTA client). Alternatively, a non-OTA update agent is executed.

At 210, the communal computing device analyzes the indication of the update code.

The analysis may include searching a record dataset of updates, for locally stored update codes to identify the update code according to the indication. The locally stored update codes may be stored on a data storage device of the communal computing device, and/or a data storage device with fast access by the communal computing device. The locally stored update codes may include previously downloaded full and/or partial (e.g., diff) versions of different updates codes from different servers. When the update code is found, the communal computing device obtains the update code from the local storage. Using the locally stored version improves performance of the communal device and/or network connection by avoiding repeated downloads of large update files for multiple end devices. Alternatively, when the update code is not found in local storage, the communal computing device obtains the update code from the selected server.

The analysis may include determining whether the update code to install on the end device requires a full version, or whether a delta between the updated version and the current version installed on the end device may be installed. The decision may be based on the size of the full version of the update code. Optionally, when the size of the full updated version is below a threshold, the full version is scheduled to be updated to the end device. When the communal computing device determines that a full version is required and is not currently locally installed, the communal computing device may download the full updated version from the update server to the local storage device. It may be more computationally efficient to install the full version when the size is below the threshold, rather than compute a delta and install the delta. Alternatively, when the size of the full updated version is above a threshold, a delta is to be installed on the end device as the update. It may be more computationally efficient to install the delta which may be small, rather than the entire new version which may be very large. When the communal computing device determines that the delta is required and/or sufficient, the communal computing device may compute the delta and/or obtain the delta from the update server.

The communal computing device may compute the delta version using the following exemplary process: Downloading the full updated version from the update server to a local storage device. Optionally downloading the current full version from end device to the local storage (when not already stored on the local storage). Generating a delta code between the full updated version and the existing version of update code currently stored on the end client. Locally storing the generated delta code. Locally storing the delta code enables installing the delta code on other end devices with a same scenario without re-downloading the full version and without re-computing the delta, which improves computational performance of the communal computing device.

At 212, the communal computing device updates the end device with the full version and/or delta.

Optionally, in the case of the full version, the communal computing device overwrites the existing version of the code using the full updated version.

Alternatively, in the case of the delta, the communal computing device updates the existing version of the code using the delta. A communication protocol and/or update protocol may be used for adding the delta to the existing version, for example, a communication protocol based on Unified Diagnostic Services (UDS).

Referring now back to FIG. 3, dataflow between end device(s) (e.g., 150 as described with reference to FIG. 1), communal computing device (e.g., 104 as described with reference to FIG. 1), and update server (e.g., 118 as described with reference to FIG. 1), is described. The dataflow may be between and/or include other components of system 100 described with reference to FIG. 1. The dataflow may correspond to, and/or be based on, the method described with reference to FIG. 2.

At 214, the communal computing device updates a record dataset of end devices, to indicate the update, for example, the ID of the end device that was updated, time and/or date of the update, which version is currently installed, type of update (e.g., full version or delta), and the like. The record may be stored by the communal computing device and/or by the end device. The communal computing device and/or the end device may generate metadata using the information of the record to provide to the communal computing device for the next update.

At 216, one or more features described with reference to 202-214 are iterated, for a subsequent update. Each iteration may be performed, for example, triggered by a timer at regular intervals, upon each docking, upon each charging, and/or triggered by other events. During a next iteration, the metadata provided by the end device may be based on the record created by the communal computing device during the previous iteration.

At 302, end device(s) 150 connect to communal computing device 104, for example, by connecting to a charging station, docking station, and/or to the communal computing device itself, for example, as described with reference to 202 of FIG. 2.

At 304, communal computing device 104 and end device(s) 150 establish communication, for example, establish a communication channel, for example, as described with reference to 202 of FIG. 2.

At 306, communal computing device 104 obtains metadata from end device(s) 150, for example, as described with reference to 204 of FIG. 2.

At 308, communal computing device 104 selects an update server according to the metadata, for example, as described with reference to 206 of FIG. 2.

At 310, communal computing device 104 obtains an indication of update code from the selected update server 118, for example, as described with reference to 208 of FIG. 2.

At 312, communal computing device 104 analyzes the indication of update code, and may perform one or more actions such as obtaining a full version of the update code from update server 118 and/or computing a delta code, for example, as described with reference to 210 of FIG. 2.

At 314, communal computing device 104 updates end device(s) 150, for example, as described with reference to 212 of FIG. 2.

At 316, communal computing device 104 creates and/or updates a record for end device(s) 150, for example, as described with reference to 214 of FIG. 2.

As used herein the term "about" refers to ± 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

## Claims

1. A system (100) for updating each of a plurality of mobile devices, comprising:
a communal computing device (104) configured to communicate with each of a plurality of end devices (150) over a data interface (122A), wherein said communal computing device (104) is an external device to said plurality of end devices (150), the communal computing device (104) further configured to communicate with a plurality of update servers (118) over a network interface (122B);
the communal computing device (104) further comprising:
at least one processor (102) executing a code (106A) for:
establishing a communication channel with a respective end device of the plurality of end devices (150) during charging and/or docking of the respective end device;
obtaining metadata (204, 306) from the respective end device to receive and execute update code;
selecting, an update server (206, 308) from a plurality of update servers according to the metadata;
obtaining (208, 310), from the update server, an indication of update code for installation on the respective end device; and
updating (212, 314), the respective end device with the update code identified according to the indication of update code (210, 312);
wherein each of the plurality of end devices is without an over the air, OTA, update agent deployed thereon.

2. The system (100) of claim 1, wherein the at least one processor establishes a different communication channel with each one of the plurality of end devices without the update agent deployed thereon, wherein different metadata is obtained from each end device, wherein a different update server is selected for each of the plurality of end devices according to respective metadata.

3. The system (100) of claim 1 or 2, wherein the at least one processor is connected to a charging station, and wherein the at least one processor executes the code for updating the respective end device while the respective end device is charging at the charging station.

4. The system (100) of any preceding claim, wherein each of the plurality of end devices includes an interface for communicating with the at least one processor, wherein the interface is unable to communicate with other devices.

5. The system (100) of any preceding claim, wherein the respective end device comprises a drone; wherein the at least one processor is optionally connected to a docking station, and wherein the at least one processor executes the code for updating the respective end device while the respective end device is docking at the docking station.

6. The system (100) of any preceding claim, wherein the metadata includes at least one of: brand of the respective end device, model of the respective end device, manufacturer of the respective end device, current software version installed on the respective end device, and time and/or date of last update.

7. The system (100) of any preceding claim, further comprising code for searching a plurality of locally stored update codes to identify the update code according to the indication; wherein the at least one processor optionally executing a code for, when the update code is not found in local storage, obtaining the update code from the selected server.

8. The system (100) of any preceding claim, wherein when the update code comprises a delta between an updated version and a current version installed on the respective end device, the at least one processor further executes a code for updating the respective end device using the delta.

9. The system (100) of claim 8, wherein the at least one processor updates the respective end device with the delta using a communication protocol based on Unified Diagnostic Services, UDS, established between the respective end device and the at least one processor.

10. The system (100) of any preceding claim, wherein when the update code comprises a full updated version of a size below a threshold, an existing version of the code on the respective end device is overwritten with the full updated version.

11. The system (100) of any preceding claim, wherein when the update code comprises a full updated version of a size above a threshold, the at least one processor further executes a code for:
downloading the full updated version from the update server to a local storage device,
generating a delta code between the full updated version and an existing version of update code currently stored on the end client,
locally storing the generated delta code, and
updating the respective end device using the generated delta code.

12. The system (100) of any preceding claim, wherein the at least one processor executes an OTA client for obtaining the update code from the update server for the respective end device.

13. A method for updating each of a plurality of mobile devices, comprising:
using at least one processor (102) of a communal computing device (104), which is an external device to a plurality of end devices (150), configured to communicate with a plurality of update servers (118) over a network interface (122B) and to communicate with each of the plurality of end devices (150) over a data interface (122A), for:
establishing a communication channel with a respective end device of the plurality of end devices (150) during charging and/or docking of the respective end device;
obtaining (204, 306) metadata from the respective end device to receive and execute update code;
selecting (206, 308) an update server from a plurality of update servers according to the metadata;
obtaining (208, 310), from the update server, an indication of update code for installation on the respective end device; and
updating (212, 314), the respective end device with the update code identified according to the indication of update code (210, 312);
wherein each of the plurality of end devices (150) is without an over the air, OTA, update agent deployed thereon.

14. A non-transitory medium storing program instructions for updating each of a plurality of mobile devices, which, when executed by a processor of a communal computing device (104), which is an external device to a plurality of end devices (150), configured to communicate with a plurality of update servers (118) over a network interface (122B) and to communicate with each of the plurality of end devices (150) over a data interface (122A), cause the processor to:
establish a communication channel with a respective end device of the plurality of end devices (150) during charging and/or docking of the respective end device;
obtain (204, 306) metadata from the respective end device to receive and execute update code;
select (206, 308) an update server from a plurality of update servers according to the metadata;
obtain (208, 310), from the update server, an indication of update code for installation on the respective end device; and
update (212, 314) the respective end device with the update code identified according to the indication of update code (210, 312);
wherein each of the plurality of end devices (150) is without an over the air, OTA, update agent deployed thereon.

## Patentansprüche

1. System (100) zur Aktualisierung jeder einer Mehrzahl von mobilen Vorrichtungen, umfassend:
eine gemeinschaftliche Rechenvorrichtung (104), die konfiguriert ist, um mit jeder einer Mehrzahl von Endvorrichtungen (150) über eine Datenschnittstelle (122A) zu kommunizieren,
wobei die gemeinschaftliche Rechenvorrichtung (104) eine externe Vorrichtung zu der Mehrzahl von Endvorrichtungen (150) ist, wobei die gemeinschaftliche Rechenvorrichtung (104) ferner konfiguriert ist, um mit einer Mehrzahl von Aktualisierungsservern (118) über eine Netzwerkschnittstelle (122B) zu kommunizieren;
die gemeinschaftliche Rechenvorrichtung (104) ferner umfassend:
mindestens einen Prozessor (102), der einen Code (106A) ausführt für:
Herstellen eines Kommunikationskanals mit einer jeweiligen Endvorrichtung der Mehrzahl von Endvorrichtungen (150) während des Ladens und/oder Andockens der jeweiligen Endvorrichtung;
Erhalten von Metadaten (204, 306) von der jeweiligen Endvorrichtung, um Aktualisierungscode zu empfangen und auszuführen;
Auswählen eines Aktualisierungsservers (206, 308) aus einer Mehrzahl von Aktualisierungsservern gemäß den Metadaten;
Erhalten (208, 310), von dem Aktualisierungsserver, einer Angabe des Aktualisierungscodes zur Installation auf der jeweiligen Endvorrichtung; und
Aktualisieren (212, 314) der jeweiligen Endvorrichtung mit dem Aktualisierungscode, der gemäß der Angabe des Aktualisierungscodes (210, 312) identifiziert wird;
wobei auf jeder der Mehrzahl von Endvorrichtungen kein Over-the-Air-, OTA-, Aktualisierungsagent eingesetzt ist.

2. System (100) nach Anspruch 1, wobei der mindestens eine Prozessor mit jeder einzelnen der Mehrzahl von Endvorrichtungen ohne den darauf eingesetzten Aktualisierungsagenten einen anderen Kommunikationskanal herstellt, wobei unterschiedliche Metadaten von jeder Endvorrichtung erhalten werden, wobei ein anderer Aktualisierungsserver für jede der Mehrzahl von Endvorrichtungen gemäß jeweiligen Metadaten ausgewählt wird.

3. System (100) nach Anspruch 1 oder 2, wobei der mindestens eine Prozessor mit einer Ladestation verbunden ist und wobei der mindestens eine Prozessor den Code zum Aktualisieren der jeweiligen Endvorrichtung ausführt, während die jeweilige Endvorrichtung an der Ladestation geladen wird.

4. System (100) nach einem der vorhergehenden Ansprüche, wobei jede der Mehrzahl von Endvorrichtungen eine Schnittstelle zur Kommunikation mit dem mindestens einen Prozessor beinhaltet, wobei die Schnittstelle nicht in der Lage ist, mit anderen Vorrichtungen zu kommunizieren.

5. System (100) nach einem der vorhergehenden Ansprüche, wobei die jeweilige Endvorrichtung eine Drohne umfasst; wobei der mindestens eine Prozessor optional mit einer Dockingstation verbunden ist und wobei der mindestens eine Prozessor den Code zum Aktualisieren der jeweiligen Endvorrichtung ausführt, während die jeweilige Endvorrichtung an der Dockingstation andockt.

6. System (100) nach einem der vorhergehenden Ansprüche, wobei die Metadaten mindestens eines von Folgendem beinhalten: Marke der jeweiligen Endvorrichtung, Modell der jeweiligen Endvorrichtung, Hersteller der jeweiligen Endvorrichtung, aktuelle auf der jeweiligen Endvorrichtung installierte Softwareversion und Zeitpunkt und/oder Datum der letzten Aktualisierung.

7. System (100) nach einem der vorhergehenden Ansprüche, ferner umfassend Code zum Durchsuchen einer Mehrzahl von lokal gespeicherten Aktualisierungscodes, um den Aktualisierungscode gemäß der Angabe zu identifizieren; wobei der mindestens eine Prozessor optional einen Code ausführt, um, wenn der Aktualisierungscode nicht im lokalen Speicher gefunden wird, den Aktualisierungscode von dem ausgewählten Server zu erhalten.

8. System (100) nach einem der vorhergehenden Ansprüche, wobei, wenn der Aktualisierungscode ein Delta zwischen einer aktualisierten Version und einer auf der jeweiligen Endvorrichtung installierten aktuellen Version umfasst, der mindestens eine Prozessor ferner einen Code zum Aktualisieren der jeweiligen Endvorrichtung unter Verwendung des Deltas ausführt.

9. System (100) nach Anspruch 8, wobei der mindestens eine Prozessor die jeweilige Endvorrichtung mit dem Delta unter Verwendung eines auf Unified Diagnostic Services, UDS, basierenden Kommunikationsprotokolls aktualisiert, das zwischen der jeweiligen Endvorrichtung und dem mindestens einen Prozessor hergestellt ist.

10. System (100) nach einem der vorhergehenden Ansprüche, wobei, wenn der Aktualisierungscode eine vollständige aktualisierte Version mit einer Größe unterhalb eines Schwellenwerts umfasst, eine vorhandene Version des Codes auf der jeweiligen Endvorrichtung mit der vollständigen aktualisierten Version überschrieben wird.

11. System (100) nach einem der vorhergehenden Ansprüche, wobei, wenn der Aktualisierungscode eine vollständige aktualisierte Version mit einer Größe oberhalb eines Schwellenwerts umfasst, der mindestens eine Prozessor ferner einen Code ausführt für:
Herunterladen der vollständigen aktualisierten Version von dem Aktualisierungsserver auf eine lokale Speichervorrichtung,
Erzeugen eines Delta-Codes zwischen der vollständigen aktualisierten Version und einer vorhandenen Version des Aktualisierungscodes, die derzeit auf dem Endclient gespeichert ist, lokales Speichern des erzeugten Delta-Codes und
Aktualisieren der jeweiligen Endvorrichtung unter Verwendung des erzeugten Delta-Codes.

12. System (100) nach einem der vorhergehenden Ansprüche, wobei der mindestens eine Prozessor einen OTA-Client ausführt, um den Aktualisierungscode von dem Aktualisierungsserver für die jeweilige Endvorrichtung zu erhalten.

13. Verfahren zur Aktualisierung jeder einer Mehrzahl von mobilen Vorrichtungen, umfassend:
unter Verwendung mindestens eines Prozessors (102) einer gemeinschaftlichen Rechenvorrichtung (104), die eine externe Vorrichtung zu einer Mehrzahl von Endvorrichtungen (150) ist, konfiguriert, um mit einer Mehrzahl von Aktualisierungsservern (118) über eine Netzwerkschnittstelle (122B) zu kommunizieren und um mit jeder der Mehrzahl von Endvorrichtungen (150) über eine Datenschnittstelle (122A) zu kommunizieren, für:
Herstellen eines Kommunikationskanals mit einer jeweiligen Endvorrichtung der Mehrzahl von Endvorrichtungen (150) während des Ladens und/oder Andockens der jeweiligen Endvorrichtung;
Erhalten (204, 306) von Metadaten von der jeweiligen Endvorrichtung, um Aktualisierungscode zu empfangen und auszuführen;
Auswählen (206, 308) eines Aktualisierungsservers aus einer Mehrzahl von Aktualisierungsservern gemäß den Metadaten;
Erhalten (208, 310), von dem Aktualisierungsserver, einer Angabe des Aktualisierungscodes zur Installation auf der jeweiligen Endvorrichtung; und
Aktualisieren (212, 314) der jeweiligen Endvorrichtung mit dem Aktualisierungscode, der gemäß der Angabe des Aktualisierungscodes (210, 312) identifiziert wird;
wobei auf jeder der Mehrzahl von Endvorrichtungen (150) kein Over-the-Air-, OTA-, Aktualisierungsagent eingesetzt ist.

14. Nichtflüchtiges Medium, das Programmanweisungen zur Aktualisierung jeder einer Mehrzahl von mobilen Vorrichtungen speichert, die, wenn sie von einem Prozessor einer gemeinschaftlichen Rechenvorrichtung (104) ausgeführt werden, die eine externe Vorrichtung zu einer Mehrzahl von Endvorrichtungen (150) ist, konfiguriert, um mit einer Mehrzahl von Aktualisierungsservern (118) über eine Netzwerkschnittstelle (122B) zu kommunizieren und um mit jeder der Mehrzahl von Endvorrichtungen (150) über eine Datenschnittstelle (122A) zu kommunizieren, den Prozessor dazu veranlassen:
einen Kommunikationskanal mit einer jeweiligen Endvorrichtung der Mehrzahl von Endvorrichtungen (150) während des Ladens und/oder Andockens der jeweiligen Endvorrichtungen herzustellen;
Metadaten von der jeweiligen Endvorrichtung zu erhalten (204, 306), um Aktualisierungscode zu empfangen und auszuführen;
einen Aktualisierungsserver aus einer Mehrzahl von Aktualisierungsservern gemäß den Metadaten auszuwählen (206, 308);
von dem Aktualisierungsserver eine Angabe des Aktualisierungscodes zur Installation auf der jeweiligen Endvorrichtung zu erhalten (208, 310); und
die jeweilige Endvorrichtung mit dem Aktualisierungscode zu aktualisieren (212, 314), der gemäß der Angabe des Aktualisierungscodes (210, 312) identifiziert wird;
wobei auf jeder der Mehrzahl von Endvorrichtungen (150) kein Over-the-Air-, OTA-, Aktualisierungsagent eingesetzt ist.

## Revendications

1. Système (100) pour mettre à jour chacun d'une pluralité de dispositifs mobiles, comprenant :
un dispositif informatique commun (104) configuré pour communiquer avec chacun d'une pluralité de dispositifs finaux (150) via une interface de données (122A), dans lequel ledit dispositif informatique commun (104) est un dispositif externe à ladite pluralité de dispositifs finaux (150), le dispositif informatique commun (104) étant en outre configuré pour communiquer avec une pluralité de serveurs de mise à jour (118) via une interface réseau (122B) ;
le dispositif informatique commun (104) comprenant en outre :
au moins un processeur (102) exécutant un code (106A) pour :
établir un canal de communication avec un dispositif final respectif de la pluralité de dispositifs finaux (150) pendant la charge et/ou l'amarrage du dispositif final respectif ;
l'obtention de métadonnées (204, 306) à partir du dispositif final respectif pour recevoir et exécuter un code de mise à jour ;
la sélection d'un serveur de mise à jour (206, 308) à partir d'une pluralité de serveurs de mise à jour selon les métadonnées ;
l'obtention (208, 310), à partir du serveur de mise à jour, d'une indication du code de mise à jour à installer sur le dispositif final respectif ; et
la mise à jour (212, 314) du dispositif final respectif avec le code de mise à jour identifié selon l'indication du code de mise à jour (210, 312) ;
dans lequel chacun de la pluralité de dispositifs finaux est dépourvu d'un agent de mise à jour par liaison radio, OTA, déployé sur celui-ci.

2. Système (100) selon la revendication 1, dans lequel l'au moins un processeur établit un canal de communication différent avec chacun de la pluralité de dispositifs finaux sans l'agent de mise à jour déployé sur celui-ci, dans lequel des métadonnées différentes sont obtenues à partir de chaque dispositif final, dans lequel un serveur de mise à jour différent est sélectionné pour chacun de la pluralité de dispositifs finaux selon les métadonnées respectives.

3. Système (100) selon la revendication 1 ou 2, dans lequel l'au moins un processeur est connecté à une station de charge, et dans lequel l'au moins un processeur exécute le code pour mettre à jour le dispositif final respectif pendant que le dispositif final respectif est en charge au niveau de la station de charge.

4. Système (100) selon une quelconque revendication précédente, dans lequel chacun de la pluralité de dispositifs finaux comporte une interface pour communiquer avec l'au moins un processeur, dans lequel l'interface est incapable de communiquer avec d'autres dispositifs.

5. Système (100) selon une quelconque revendication précédente, dans lequel le dispositif final respectif comprend un drone ; dans lequel l'au moins un processeur est éventuellement connecté à une station d'accueil, et dans lequel l'au moins un processeur exécute le code pour mettre à jour le dispositif final respectif pendant que le dispositif final respectif s'amarre au niveau de la station d'accueil.

6. Système (100) selon une quelconque revendication précédente, dans lequel les métadonnées comportent au moins l'un des éléments suivants : marque du dispositif final respectif, modèle du dispositif final respectif, fabricant du dispositif final respectif, version actuelle du logiciel installée sur le dispositif final respectif et date et/ou heure de la dernière mise à jour.

7. Système (100) selon une quelconque revendication précédente, comprenant en outre un code permettant de rechercher une pluralité de codes de mise à jour stockés localement afin d'identifier le code de mise à jour selon l'indication ; dans lequel l'au moins un processeur exécute éventuellement un code permettant, lorsque le code de mise à jour n'est pas trouvé dans le stockage local, d'obtenir le code de mise à jour à partir du serveur sélectionné.

8. Système (100) selon une quelconque revendication précédente, dans lequel lorsque le code de mise à jour comprend un delta entre une version mise à jour et une version actuelle installée sur le dispositif final respectif, l'au moins un processeur exécute en outre un code pour mettre à jour le dispositif final respectif en utilisant le delta.

9. Système (100) selon la revendication 8, dans lequel l'au moins un processeur met à jour le dispositif final respectif avec le delta en utilisant un protocole de communication basé sur le service de diagnostic unifié, UDS, établi entre le dispositif final respectif et l'au moins un processeur.

10. Système (100) selon une quelconque revendication précédente, dans lequel lorsque le code de mise à jour comprend une version entièrement mise à jour d'une taille inférieure à un seuil, une version existante du code sur le dispositif final respectif est écrasée par la version entièrement mise à jour.

11. Système (100) selon une quelconque revendication précédente, dans lequel, lorsque le code de mise à jour comprend une version entièrement mise à jour d'une taille supérieure à un seuil, l'au moins un processeur exécute en outre un code pour :
télécharger la version entièrement mise à jour à partir du serveur de mise à jour vers un dispositif de stockage local,
générer un code delta entre la version entièrement mise à jour et une version existante du code de mise à jour actuellement stockée sur le client final,
stocker localement le code delta généré, et
mettre à jour le dispositif final respectif en utilisant le code delta généré.

12. Système (100) selon une quelconque revendication précédente, dans lequel l'au moins un processeur exécute un client OTA pour obtenir le code de mise à jour à partir du serveur de mise à jour pour le dispositif final respectif.

13. Procédé pour mettre à jour chacun d'une pluralité de dispositifs mobiles, comprenant :
l'utilisation d'au moins un processeur (102) d'un dispositif informatique commun (104), qui est un dispositif externe à une pluralité de dispositifs finaux (150), configuré pour communiquer avec une pluralité de serveurs de mise à jour (118) via une interface réseau (122B) et pour communiquer avec chacun de la pluralité de dispositifs finaux (150) via une interface de données (122A), pour :
établir un canal de communication avec un dispositif final respectif de la pluralité de dispositifs finaux (150) pendant la charge et/ou l'amarrage du dispositif final respectif ;
l'obtention (204, 306) de métadonnées à partir du dispositif final respectif pour recevoir et exécuter un code de mise à jour ;
la sélection (206, 308) d'un serveur de mise à jour à partir d'une pluralité de serveurs de mise à jour selon les métadonnées ;
l'obtention (208, 310), à partir du serveur de mise à jour, d'une indication du code de mise à jour à installer sur le dispositif final respectif ; et
la mise à jour (212, 314) du dispositif final respectif avec le code de mise à jour identifié selon l'indication du code de mise à jour (210, 312) ;
dans lequel chacun de la pluralité de dispositifs finaux (150) est dépourvu d'un agent de mise à jour par liaison radio, OTA, déployé sur celui-ci.

14. Support non transitoire stockant des instructions de programme pour mettre à jour chacun d'une pluralité de dispositifs mobiles, qui, lorsqu'elles sont exécutées par un processeur d'un dispositif informatique commun (104), qui est un dispositif externe à une pluralité de dispositifs finaux (150), configuré pour communiquer avec une pluralité de serveurs de mise à jour (118) via une interface réseau (122B) et pour communiquer avec chacun de la pluralité de dispositifs finaux (150) via une interface de données (122A), amènent le processeur à :
établir un canal de communication avec un dispositif final respectif de la pluralité de dispositifs finaux (150) pendant la charge et/ou l'amarrage des dispositifs finaux respectifs ;
obtenir (204, 306) des métadonnées à partir du dispositif final respectif pour recevoir et exécuter un code de mise à jour ;
sélectionner (206, 308) un serveur de mise à jour à partir d'une pluralité de serveurs de mise à jour selon les métadonnées ;
obtenir (208, 310), à partir du serveur de mise à jour, une indication du code de mise à jour à installer sur le dispositif final respectif ; et
mettre à jour (212, 314) le dispositif final respectif avec le code de mise à jour identifié selon l'indication du code de mise à jour (210, 312) ;
dans lequel chacun de la pluralité de dispositifs finaux (150) est dépourvu d'un agent de mise à jour par liaison radio, OTA, déployé sur celui-ci.
